Europäisches Patentamt

European Patent Office

Office européen des brevets

(19)

(11) Publication number: **0 251 400 B1**

## (12) EUROPEAN PATENT SPECIFICATION

(45) Date of publication of patent specification: 04.09.91  (51) Int. Cl.<sup>5</sup>: **A01G 9/08**

(21) Application number: **87201188.7**

(22) Date of filing: **23.06.87**

(54) A container filler.

(30) Priority: **24.06.86 NL 8601644**

(43) Date of publication of application:
**07.01.88 Bulletin 88/01**

(45) Publication of the grant of the patent:
**04.09.91 Bulletin 91/36**

(84) Designated Contracting States:
**BE CH DE ES FR GB IT LI NL**

(56) References cited:
**DE-U- 8 614 643**
**NL-A- 7 107 992**
**US-A- 3 571 971**

(73) Proprietor: **Machinefabriek Gebr. Flier B.V.**
**Dorpsstraat 178**
**NL-2992 AB Barendrecht(NL)**

(72) Inventor: **Flier, Lambertus**
**3e Barendrechtseweg 416**
**NL-2992 SN Barendrecht(NL)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

Rank Xerox (UK) Business Services

## Description

This invention relates to the filling of containers, in particular the filling of so-called seed plates or trays, used in plant nurseries and vegetable growing with potting soil, seed soil, rockwool or other cultivation medium as disclosed in US-A-3,571,971 (BROERSMA). According to this reference an apparatus for filling containers with bulk material comprises a conveyor for feeding at least one row of successive adjoining containers along a horizontal track underneath a downwardly opening reservoir for filling material arranged above said conveyor with at least the downstream edge of the lower opening of the reservoir, as viewed in the direction of transport being adjustable in height, there being arranged behind said lower opening of the reservoir a compacting device.

By a seed tray is understood a flat, platelike container mostly having a plurality of conical cavities to be filled with soil and the like, with a plant seed being planted thereafter in each cavity. After a given growing period under accurately controlled conditions, the seedlings with attaching clods of earth can be planted out elsewhere for further growth.

In the known device during the movement of e.g. seed trays underneath the lower opening of the reservoir, the cavities are automatically filled up with filling material and additionally a more or less thick layer of filling material is formed on the filled seed trays by means of the vertically adjustable edge of the lower opening of the reservoir. The material of this cover layer is pressed into the cavities of the seed trays by means of compacting means in the form of pressure rollers. The additional quantity of pressed material in the cavities determines the density of the material in the seed trays. The pressure rollers while pressing material of the cover layer into the cavities in a tray neccessarily compact material of the cover layer which is located above separating ridges between successive cavities in the tray. This compacted material is relatively difficult to remove by sweeping means downstream of the compacting means.

It is an object of the present invention to provide a constructively simple apparatus of the subject kind wherein this disadvantage of the known apparatus is removed.

To this end the apparatus is characterized by a compacting device which is designed as a rubbing device having flexible strips pressing on and brushing over the top of said containers. In this apparatus material of the cover layer is rubbed into the cavities by the flexible strips of the rubbing device, with the additional quantity of rubbed-in material determining the density of the material in the cavities of the seed trays.

In a preferred embodiment of the present invention, the rubbing device comprises a rotor rotatable about a vertical shaft, with the flexible strips being attached to rotor arms extending parallel to and being spaced above, the conveyor. Thus as the seed are advancing, the cavities therein can be swept many times by the flexible strips and a high degree of filling can be attained.

For further control of the degree of filling, the rotor is preferably arranged to be driven at variable speed.

In order to optimize the control of the degree of filling of the containers, the rotor may be operable in a laterally enclosed space having in at least one side wall an opening closable by an adjustable slide. By adjustment of the lateral discharge opening, any surplus material can be automatically discharged.

For cleaning the container surfaces, there may be provided downstream of the rubbing device, a brush rotatable about a horizontal shaft and coacting with an inclined baffle, ensuring that filling material that has been brushed away cannot fall back onto the containers.

The apparatus according to the present invention can be compact and can be made with a minimum of parts.

For instance, in a rectangular box open at the top and at the bottom, arranged above a belt conveyor, a filling-material reservoir can be partitioned off by a transverse wall whose lower edge is adjustable in height, with the rotor shaft being mounted in the box behind the transverse wall and behind said rotor the brush, while in one of the side walls of said box, behind the transverse wall, the lateral discharge opening for excess material is provided.

The filling principle on which the present invention is based is that an additional layer of filling material is provided on a seed tray or the like container whose cavities are filled up with filling material, which additional layer is subsequently rubbed into the cavities by a pressing and rubbing movement.

One embodiment of the container filling apparatus according to the present invention will now be described, by way of example, with reference to the accompanying drawings, in which:

Fig. I is a diagrammatic, partly cross-sectional side view of the container filling apparatus; and

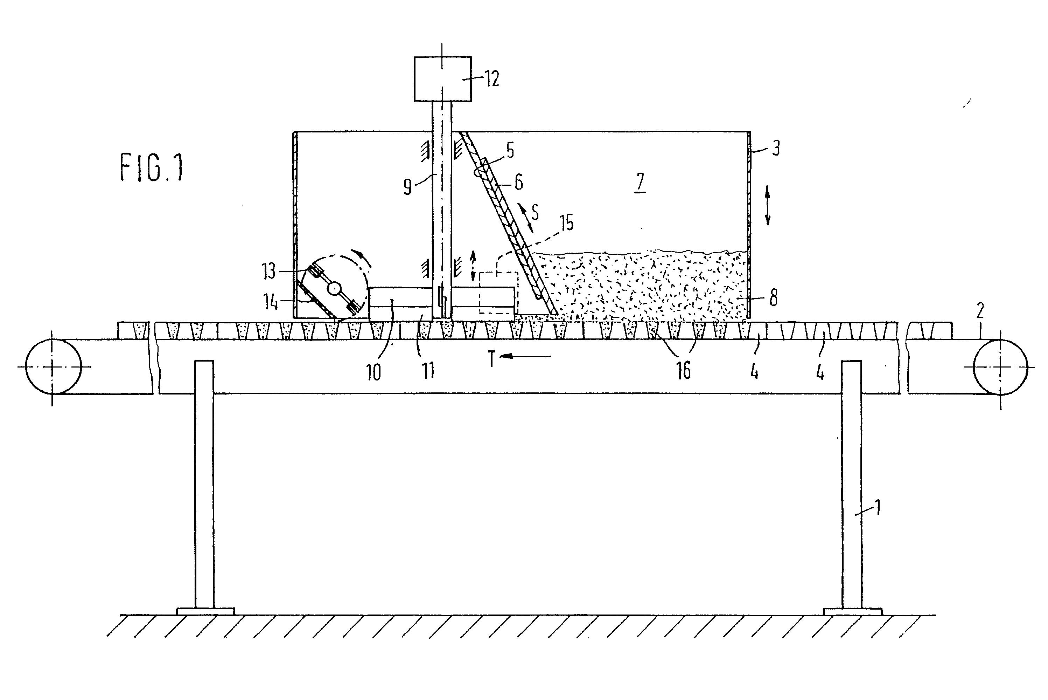

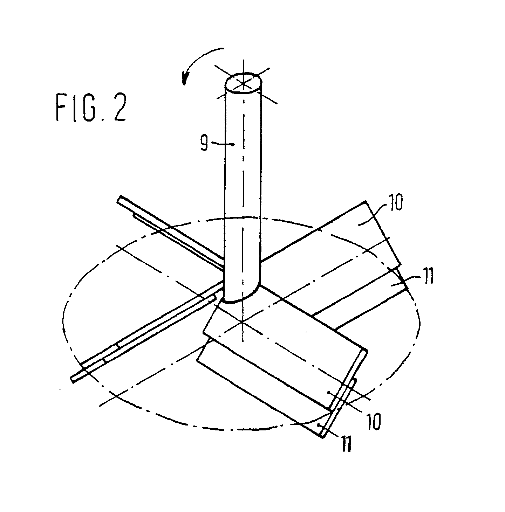

Fig. 2 is a perspective detail view of the rotor.

As shown in the drawings, the container filling apparatus comprises an endless belt conveyor 2 mounted on a frame I, the top part of said belt being drivable in the transport direction T. Arranged above said belt 2 is a rectangular box 3 adjustable in height in such a manner that various containers, such as seed trays 4, can be passed underneath box 3 on belt 2 with some clearance.

In box 3 a reservoir 7 for filling material 8 is partitioned off by an inclined transverse wall 5 having a wall portion 6 slidable according to the double arrow S.

Located behind said transverse wall 5, as viewed in the direction of transport T there is arranged a rubbing device in the form of a rotor with a vertical rotor shaft 9, arms l0 to which are attached flexible strips ll (see Fig. 2) and a drive motor l2.

Behind the rubbing device 9-l2, there is mounted a brush l3 coacting with an inclined baffle l4.

Fig. l shows in dotted lines a side opening l5 closable by a slide adjustable in height.

The operation of the apparatus shown is as follows. On belt conveyor 2, first a number of seed trays 4 are successively, and in closed-up formation, pushed underneath box 3 until the foremost trays 4 are underneath the bottom opening of the reservoir 7. Then, filling material is deposited into reservoir 7, whereby the cavities l6 in the seed trays 4 located underneath the bottom opening of reservoir 7 are automatically filled and the entire top surface of trays 4 is covered with filling material. Upon further transport of trays 4 past reservoir 7, a layer of material remains on trays 4, whose thickness depends on the level of the lower edge of the transverse wall portion 6. This material is rubbed for the most part into the seed tray cavities l6 by the rotor 9, l0, ll operative behind the transverse wall 5, 6. The quantity of filling material per cavity l6 can thus be controlled in a simple manner by adjusting the height of the transverse wall portion 6, with the rotor speed being a further possibility of control. According as the flexible strips ll on the rotor arms l0 brush more often along the tray surfaces, more material is rubbed into cavities l6. Any large lumps of material are thereby automatically reduced in size.

Finally, trays 4 are cleaned by brush l3 before emerging from underneath box 3, with the inclined baffle l4 preventing brushed away material from falling back onto trays 4.

In the event that the transverse wall portion 6 is inadvertently adjusted too high, so that so much filling material remains on trays 4 that this cannot be rubbed into the cavities l6, the excess can be discharged automatically through the lateral discharge opening l5 adjustable by a slide. Adjustment of the opening l5 provides for an additional control of the degree of filling.

## Claims

1. An apparatus for filling containers (4) with bulk materials (8), comprising a conveyor (2) for feeding at least one row of successive adjoining containers (4) along a horizontal track underneath a downwardly opening reservoir (3) for filling material arranged above said conveyor (2) with at least the downstream edge of the lower opening of the reservoir, as viewed in the direction of transport being adjustable in height, there being arranged behind said lower opening of the reservoir a compacting device (9 - 12), characterized in that said compacting device (9 - 12) is designed as a rubbing device having flexible strips (11) pressing on and brushing over the top of said containers (4).

2. An apparatus according to claim 1, characterized in that the rubbing device (9 - 12) comprises a rotor rotatable about a vertical shaft (9), with the flexible strips (11) being attached to rotor arms (10) extending parallel to, and being spaced above, the conveyor (2).

3. An apparatus according to claim 2, characterized in that the rotor (9 - 12) is drivable at variable speed.

4. An apparatus according to claim 3 or 4, characterized in that the rotor (9 - 11) is operative in a laterally enclosed space having in at least one side wall an opening (15) closable by an adjustable slide.

5. An apparatus according to any of the preceding claims, wherein downstream of the rubbing device (9 - 12) there is arranged a device (13, 14) for removing excess filling material from the filled containers, characterized in that this is designed as a brush (13) rotatable about a horizontal shaft coacting with an inclined baffle (14) ensuring that material brushed off cannot fall back onto the container (4).

6. An apparatus according to any of the preceding claims, wherein the conveyor is a belt conveyor (2) with a superposed box (3) open at its bottom, characterized in that in the box (3) a filling material reservoir (7) is partitioned off by a transverse wall (5, 6) whose lower edge is adjustable in height, said box (3) further mounting behind transverse wall (5, 6), the shaft (9) of the rotor (10) and behind the rotor (9, 10) is the brush (13), with the lateral discharge opening (15) being provided in one of the side walls of the box, behind transverse wall (5, 6).

7. A method of filling containers, in particular for filling so-called seed plates or trays (4) used in plant husbandry and vegetable growing with potting soil, seed soil, rockwool or other cultivation medium, said trays (4) being flat, platelike containers having a plurality of downwardly tapering cavities (16) therein, wherein which comprises depositing excess filling material on said plates (4) so that said cavities (16) are filled up, strickling the filling material above said plates (4) to leave a metered layer on said plates and subsequently pressing the material of said layer into said cavities (16), characterized in that the pressing of excess material into the cavities (16) is effected by rubbing said material into the cavities.

## Revendications

1. Appareil servant au remplissage de conteneurs (4) avec une matière en vrac (8), comprenant un convoyeur (2) transportant au moins une rangée de conteneurs adjacents successifs (4) le long d'un trajet horizontal sous un réservoir (3) de matière de remplissage ayant une ouverture vers le bas, placée au-dessus dudit convoyeur (2), le bord aval de l'ouverture inférieure du réservoir au moins, dans la direction de transport, étant réglable en hauteur, et un dispositif de compactage (9 à 12) étant placé en aval de ladite ouverture inférieure du réservoir, caractérisé en ce que ledit dispositif de compactage (9 à 12) est constitué par un dispositif de frottement muni de bandes flexibles (11) qui pressent et balayent le dessus desdits conteneurs (4).

2. Appareil selon la revendication 1, caractérisé en ce que le dispositif de compactage (9 à 12) comprend un rotor pouvant tourner autour d'un arbre vertical (9), les bandes flexibles (11) fixées à des bras de rotor (10) s'étendant parallèlement au convoyeur (2) et étant écartées au-dessus de ce dernier.

3. Appareil selon la revendication 2, caractérisé en ce que le rotor (9, 12) peut être entraîné à une vitesse variable.

4. Appareil selon l'une des revendications 3 ou 4, caractérisé en ce que le rotor (9,11) peut être actionné dans un espace clos latéralement, présentant dans au moins une paroi latérale, une ouverture (15) pouvant être fermée par une glissière réglable.

5. Appareil selon l'une des revendications précédentes, dans lequel se trouve, en aval du dispositif de frottement (9, 12), un dispositif (13, 14) pour retirer la matière de remplissage en excès hors des conteneurs remplis, caractérisé en ce que ledit dispositif est constitué par une brosse (13) pouvant tourner autour d'un arbre horizontal et coopérant avec un déflecteur incliné (14) qui empêche la matière enlevée par brossage de retomber sur les conteneurs (4).

6. Appareil selon l'une des revendications précédentes, dans lequel le convoyeur est un convoyeur à bande (2) avec une boîte superposée (3) ouverte au fond, caractérisé en ce que, dans la boîte (3), un réservoir de matière de remplissage (7) est défini par une paroi transversale (5, 6) dont le bord inférieur est réglable en hauteur, ladite boîte (3) contenant en outre, à l'arrière de la paroi transversale (5, 6), l'arbre (9) du rotor (10), la brosse (13) se trouvant derrière le rotor (9,10), l'ouverture d'évacuation latérale (15) étant ménagée dans une des parois latérales de la boîte, derrière la paroi transversale (5, 6).

7. Procédé pour le remplissage de conteneurs, en particulier pour le remplissage de palettes ou plateaux de semis (4) utilisés dans des installations d'horticulture' et les pépinières, avec de la terre à empoter, de la terre à semis, de la laine de roche ou autre moyen de culture, lesdits plateaux (4) étant constitués par des conteneurs plats en forme de palettes présentant une pluralité de cavités (16) coniques vers le bas, ledit procédé comportant les étapes de dépôt de matière de remplissage en excès sur les plateaux (4), afin de remplir les cavités (16), d'arasement de matière de remplissage au-dessus des plateaux (4) pour laisser une couche d'épaisseur prédéterminée sur les plateaux, puis de pression de la matière de ladite couche dans lesdites cavités (16), caractérisé en ce que la pression de la matière en excès dans les cavités(16) est réalisée par frottement, ce qui fait pénétrer ledit matériau dans les cavités.

## Patentansprüche

1. Vorrichtung zum Befüllen von Behältern (4) mit Schüttgut (8), mit einem Förderer (2) zum Zuführen wenigstens einer Reihe von hintereinander angeordneten Behältern (4) längs einer horizontalen Bahn unterhalb eines unten offenen, oberhalb des Förderers (2) angeordneten Vorratsbehälters (3) zum Befüllen des Materials, wobei wenigstens die stromabwärts gelegene Kante der unteren Öffnung des Vorratsbehälters in Transportrichtung gesehen höhenverstellbar ist und wobei hinter der unteren Öffnung des Vorratsbehälters eine Verdichtungseinrichtung (9 - 12) angeordnet ist, **dadurch gekennzeichnet,** daß die Verdichtungseinrichtung (9 - 12) als Schabeinrichtung mit flexiblen Streifen (11) ausgebildet ist, die auf die Behälter (4) drücken sowie über die Oberseiten der Behälter (4) streichen.

2. Vorrichtung nach Anspruch 1, dadurch gekennzeichnet, daß die Schabeinrichtung (9 - 12) einen Rotor aufweist, der um eine vertikale Welle (9) drehbar ist, wobei die flexiblen Streifen (11) an Rotorarmen (10) angeordnet sind, die sich parallel zu den Behältern (2) sowie mit Abstand über diesen erstrecken.

3. Vorrichtung nach Anspruch 2, dadurch gekennzeichnet, daß die Drehgeschwindigkeit des Rotors (9 - 12) veränderbar ist.

4. Vorrichtung nach Anspruch 3 oder 4, dadurch gekennzeichnet, daß der Rotor (9 - 11) in einem seitlich geschlossenen Raum betätigbar ist, wobei in wenigstens einer Seitenwand eine Öffnung (15) angeordnet ist, die durch eine Schiebetür verschließbar ist.

5. Vorrichtung nach einem der vorhergehenden Ansprüche, wobei stromabwärts der Schabeinrichtung (9 - 12) eine Einrichtung (13, 14) zum Entfernen des überschüssigen Befüllmaterials aus den befüllten Behältern angeordnet ist, dadurch gekennzeichnet, daß diese Einrichtung als Bürste (13) ausgebildet ist, die um eine horizontale Welle drehbar ist, welche mit einer schräggestellten Fläche (14) zusammenwirkt, die sicherstellt, daß das weggebürstete Material nicht zurück auf den Behälter (4) fallen kann.

6. Vorrichtung nach einem der vorhergehenden Ansprüche, wobei der Förderer ein Förderband (2) mit einem darüber angeordneten, unten offenen Kasten (3) ist, dadurch gekennzeichnet, daß in dem Kasten (3) ein Vorratsbehälter (7) für das zu befüllende Material durch eine Querwand (5, 6) mit einer höhenverstellbaren Unterkante abgeteilt ist, und daß in dem Kasten (3) hinter der Querwand (5, 6) die Welle (9) des Rotors (10) und hinter dem Rotor (9, 10) die Bürste (13) angeordnet ist, wobei die seitliche Abführöffnung (15) in einer der Seitenwände des Kastens hinter der Querwand (5, 6) vorgesehen ist.

7. Verfahren zum Befüllen von Behältern, insbesondere zum Befüllen von sogenannten Saatplatten oder Saattabletts (4) zum Bepflanzen in der Landwirtschaft sowie zur Pflanzenaufzucht mit Tonerde, Saaterde, Steinwolle oder anderen Aufzuchtmedien, wobei die Tabletts (4) flach ausgebildet sind und plattenförmige Behälter mit einer Vielzahl von nach unten schmaler werdenden Vertiefungen (16) aufweisen und wobei das zu befüllende Material derart auf die Platten (4) aufgegeben wird, daß die Vertiefungen (16) gefüllt werden, anschließend das eingefüllte Material über den Platten (4) glattgestrichen wird, so daß eine entsprechende Schicht auf den Platten verbleibt, und schließlich das Material der Schicht in die Vertiefungen (16) gepreßt wird, dadurch gekennzeichnet, daß das überstehende Material dadurch in die Vertiefungen (16) gepreßt wird, daß das Material in die Vertiefungen geschabt wird.

FIG.1

FIG. 2